# DEMANDE DE BREVET EUROPEEN

(11) **EP 2 442 419 A2**
(43) Date de publication de la demande: **18.04.2012**
(21) Numéro de dépôt: 11354046.2
(22) Date de dépôt: 20.09.2011
(51) Int. Cl.: H02H 11/00

(54) **Protection pour le branchement d'une source continue sur un équipement électronique**

(30) Priorité: 15.10.2010 FR 1004062
(71) Demandeur: Schneider Electric Industries SAS, 92500 Rueil-Malmaison (FR)
(72) Inventeur: Masson, Antoine, 38050 Grenoble Cedex 09 (FR)
(74) Mandataire: Péru, Laurence

(57) **Abrégé**

Dans un circuit (18') d'alimentation auxiliaire par source continue (16') d'une carte électronique (10), un transistor de type MOSFET (20') est monté en inverse afin de réaliser la protection électronique de la carte (10) contre l'inversion de raccordement de la source auxiliaire (16'). Ces moyens de protection très basse consommation sont agencés pour permettre en outre la recharge de la batterie (16') par une source alternative (12') alimentant la carte (10). Des moyens de type LED (1) peuvent par ailleurs garantir le détrompage du branchement en indiquant le sens de raccordement de la batterie (16').

## Description

### DOMAINE TECHNIQUE

L'invention concerne des moyens de protection permettant de vérifier le sens de branchement d'une batterie sur une carte électronique, tout en permettant la recharge de ladite batterie lors de l'alimentation de la carte par le secteur. Plus généralement, l'invention se rapporte à une protection électronique garantissant le sens de branchement d'une source continue sur un équipement, une source externe pouvant par ailleurs être utilisée pour charger la batterie et/ou alimenter l'équipement.

### ETAT DE LA TECHNIQUE

Les réseaux électriques comprennent de plus en plus d'équipements électriques et électroniques qui, bien que classiquement alimentés par le réseau lui-même, se doivent de fonctionner lorsque l'alimentation est coupée : voir par exemple les équipements relatifs à la gestion des pannes et à la téléconduite du réseau. Pour assurer cette fonctionnalité, une double alimentation est prévue, avec notamment une source alternative AC issue du secteur et une source continue DC auxiliaire, par exemple une batterie rechargeable. Pour éviter tout dommage sur le système électronique, il ne doit pas y avoir inversion de polarité et le branchement de l'alimentation continue doit être réalisé de manière correcte au niveau des bornes.

Or, pour des raisons commerciales, logistiques et de maintenance, mais aussi pour éviter une décharge, les batteries ne sont classiquement pas connectées au circuit électronique lors de la livraison du produit. A la mise en service, un opérateur procède au raccordement et, pour éviter une erreur, une batterie peut posséder un connecteur détrompé, ou nécessiter un branchement via un connecteur à vis. Malgré ces précautions, une inversion de raccordement demeure possible, notamment du fait que l'accessibilité et donc la visibilité du branchement sont souvent faibles.

Pour protéger l'électronique, y compris en cas de branchement inversé, diverses solutions ont été proposées. Une solution de protection à usage unique consiste à insérer un fusible ou autre élément passif, tel que présenté dans DE 10 2004 019817. Pour permettre de multiples connexions, le fusible peut être remplacé par différents composants assurant la protection: EP 1 206 025, US 201045257 ou DE 10 2004 044504 proposent ainsi des circuits complexes et coûteux, l'augmentation du nombre de composants multipliant par ailleurs les défaillances, sans compter les pertes par effet Joule et/ou l'alimentation dédiée nécessaire pour leur fonctionnement. Certains systèmes plus simples ont été développés, comme par exemple dans DE 101 51 418 ou US RE 36472 ; cependant, le circuit n'autorise alors pas l'inversion de courant et empêche ainsi de recharger la batterie directement par l'alimentation de secteur de la carte électronique.

Les systèmes de protection existants ne permettent ainsi pas à la fois de protéger le système électronique et de recharger la batterie, tout en restant d'un coût et d'une complexité compatibles avec un vaste déploiement. Or le grand public, avec par exemple des applications comme le photovoltaïque ou les véhicules électriques, se trouve de plus en plus confronté à la problématique d'inversion de polarité avec batteries rechargeables.

### EXPOSE DE L'INVENTION

Parmi autres avantages, l'invention vise à pallier certains de ces inconvénients en proposant un système qui évite les erreurs de raccordement et assure la protection électronique, tout en étant peu onéreux et à très basse consommation énergétique. Pour ce faire, l'invention propose un circuit d'alimentation défini dans la revendication 1.

L'invention se rapporte ainsi à l'utilisation d'un transistor de type MOSFET inversé pour protéger un équipement électronique, comme une carte, contre l'inversion de branchement d'une source d'énergie continue, par exemple une batterie rechargeable. L'invention tire parti du fait que les MOSFET comprennent intrinsèquement une diode parasite dans leur direction inverse de fonctionnement : lorsque la source continue est inversée, la diode bloque le courant, et le MOSFET n'est pas passant, de sorte que l'équipement électronique ne reçoit pas de courant susceptible de l'endommager. L'invention utilise également la propriété de réversibilité en courant des transistors MOSFET; en cas de raccordement correct, l'équipement peut être alimenté par batterie et, inversement, lorsqu'une alimentation alternative de l'équipement est mise en place, le MOSFET est passant, de sorte que la source continue peut être rechargée par l'alimentation externe.

Sous un de ses aspects, l'invention est également relative à un circuit d'alimentation avec des moyens de protection comprenant un transistor de type MOSFET. Le circuit comprend des moyens de raccordement d'une source continue, des moyens de raccordement d'un équipement électronique, ainsi que des deuxièmes moyens de raccordement de l'équipement électronique à une source d'alimentation alternative, munie de moyens d'interruption qui peuvent être commandés par le sens du courant au sein du circuit. Le MOSFET du circuit selon l'invention est monté en inverse entre les moyens de raccordement de l'équipement électronique et les moyens de raccordement de la source continue ; en particulier, lorsque le circuit est à tension positive, le MOSFET est de type P, avec sa source connectée aux moyens de raccordement de l'équipement électronique et son drain connecté à la source continue.

Avantageusement, le circuit selon l'invention comprend des moyens de protection du MOSFET, notamment une diode Zener limitant sa tension de grille, ce qui autorise une large plage de tension d'entrée continue. De préférence, des moyens sont prévus pour indiquer si la source continue est branchée correctement et/ou si la source continue est inversée.

De préférence, le circuit selon l'invention comprend une carte, ou autre composant, électronique connectée aux moyens de raccordement de l'équipement électronique, et la source continue est une batterie rechargeable. Les moyens indicateurs peuvent se présenter sous la forme de diodes montées en parallèle autour de la batterie, notamment de deux diodes électroluminescentes de couleur différente montées inversées l'une par rapport à l'autre afin d'identifier le sens de raccordement de la batterie.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
Les figures 1A, 1B et 1C montrent un dispositif selon l'invention dans les différentes configurations de branchement.
La figure 2 illustre un mode de réalisation selon l'invention.

### DESCRIPTION DETAILLEE D'UN MODE DE REALISATION PREFERE

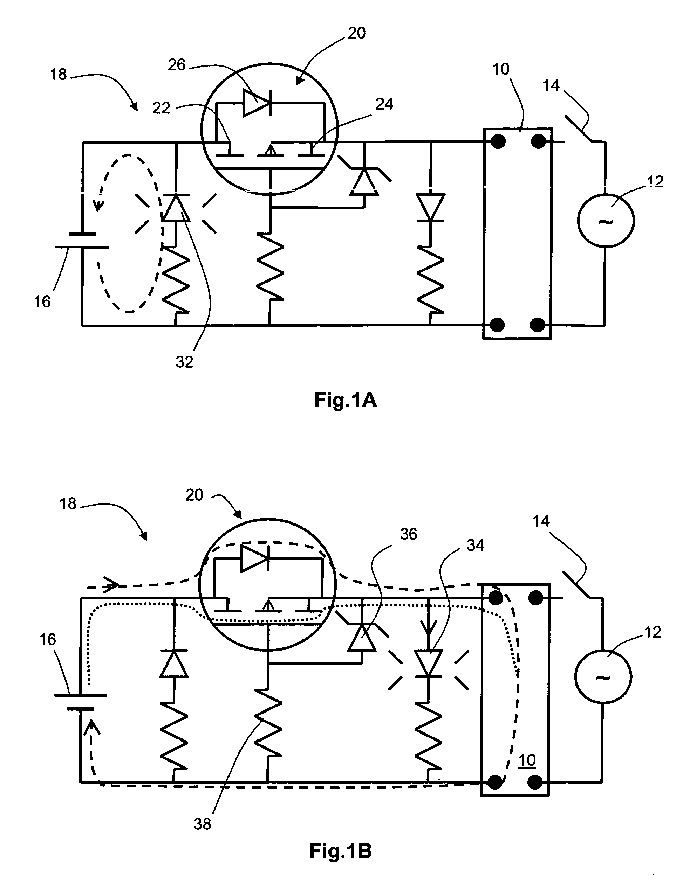

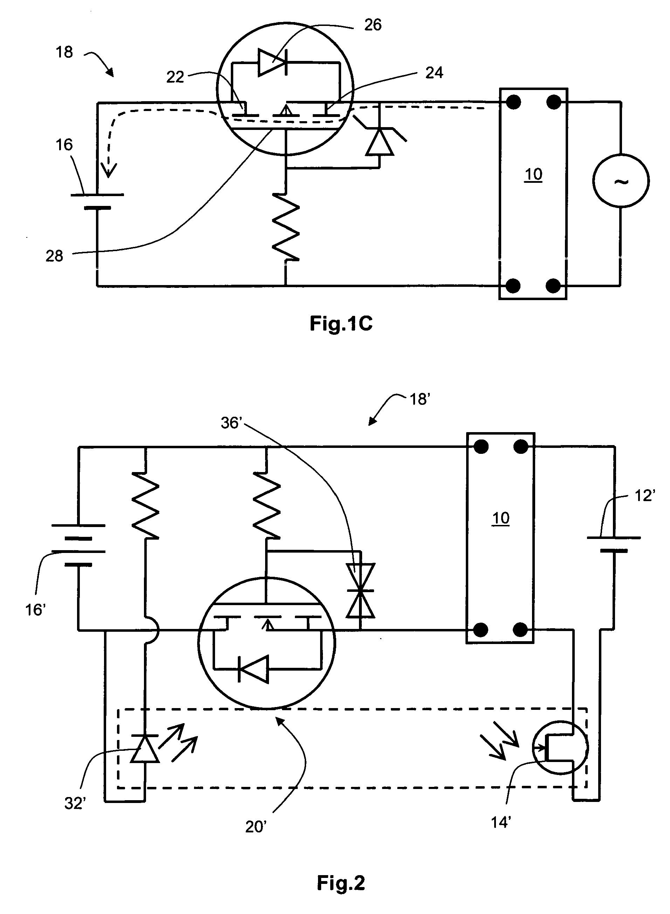

La solution selon l'invention trouve un avantage particulier pour une carte électronique 10 alimentée principalement par le secteur 12, avec des moyens interrupteurs 14 de l'alimentation, et un dispositif de stockage d'énergie 16 de type batterie susceptible de suppléer à l'alimentation de la carte 10 ; elle sera décrite en relation avec cette configuration, également illustrée en figure 1. Le circuit électrique 18 de branchement de la batterie 16 peut comprendre des moyens interrupteurs (non illustré) mais, usuellement, la déconnexion est réalisée directement par débranchement de la batterie 16.

Pour protéger électroniquement la carte 10 en cas d'inversion de polarité de la batterie 16, le circuit 18 selon l'invention est muni d'un transistor à effet de champ à grille isolée 20, ou transistor à effet de champ à structure métal-oxyde-semiconducteur, plus communément appelé MOSFET (« *Metal Oxide Semiconductor Field Effect Transistor* »), entre la carte 10 à protéger et la source de courant continu 16 susceptible d'être inversée. Le MOSFET 20 est, selon l'invention, monté en inverse, c'est-à-dire, dans le cadre illustré d'un circuit 18 à tension positive par rapport à la référence, un MOSFET 20 de type P à enrichissement est monté avec son drain 22 relié à la batterie 16 et sa source 24 reliée à la carte électronique 10. La tension de grille du MOSFET 20 est donc négative pour le circuit 18 fermé, en absence d'autre source de courant 12.

L'invention tire parti du fait qu'une diode 26 est intrinsèquement associée au drain 22 et à la source 24 d'un MOSFET 20. Cette diode 26, usuellement considérée comme parasite et parfois appelée diode BODY, implique que le MOSFET 20 bloque le courant dans une seule direction : c'est cette fonction d'interruption du courant par la diode 26 qui est utilisée selon l'invention pour protéger le circuit 18.

Ainsi, tel qu'illustré en figure 1A lorsque la batterie 16 est montée « à l'envers », c'est-à-dire que sa polarité est inversée par rapport à la tension positive d'alimentation du circuit 18, la tension de la grille 28 du MOSFET 20 est positive et la diode 26 intrinsèque est elle aussi bloquée car polarisée en inverse. Comme il n'y a pas de passage de courant entre la source 24 et le drain 22 ni à travers la diode 26, aucun courant ne peut transiter depuis la batterie 16 inversée vers la carte 10, qui est donc protégée.

Il est avantageux que cet état d'inversion du branchement de la batterie 16 soit signalé. Par exemple, des moyens indicateurs du montage erroné, alimentés par la batterie 16 elle-même, peuvent être prévus. Notamment, une diode 32 passante en cas d'inversion du sens de batterie 16 associée à des moyens lumineux, par exemple une diode électroluminescente rouge, permettent à l'usager de corriger le branchement de la batterie 16. Avantageusement, dans cette configuration, une alimentation par le secteur 12 est empêchée de façon à ne pas endommager la batterie 16, par exemple par couplage des moyens indicateurs 32 avec l'interrupteur 14.

Pour le même circuit 18, si la batterie 16 est placée correctement (figure 1B), la diode de corps 26 du MOSFET 20 est passante, car polarisée en direct : si l'interrupteur 14 de secteur 12 est coupé, la batterie 16 peut ainsi alimenter la carte 10, au minimum par passage du courant à travers la diode 26 du MOSFET 20. Il peut être avantageux également de mettre en place des moyens de visualisation 34 de la polarisation correcte de la batterie 16, par exemple par une diode électroluminescente verte montée en parallèle et en inverse de la rouge 32.

Il est par ailleurs avantageux que la tension nominale de la batterie 16 soit supérieure à la tension de seuil de déclenchement de grille du MOSFET 20, qui est par exemple de 4 V. Ainsi, lorsque la batterie 16 délivre une tension suffisante, bien que sa tension de grille reste négative, le MOSFET 20 devient passant et permet de suppléer le courant fonctionnel de la diode de corps 26, par passage préférentiel à moindre résistance du transistor MOSFET 22, 24, 28, ce qui minimise les pertes du montage 18.

Pour limiter la tension de grille du MOSFET 20 lorsque la tension de la batterie 16 dépasse une tension maximale acceptable, par exemple 20 V, le circuit 18 est muni de moyens de limitation de tension, par exemple une diode Zener 36. Par ailleurs, une résistance de grille 38 est associée au MOSFET 20 afin de polariser la grille 28 du transistor 20, ce qui limite également les pertes par effet Joule, le courant de commande n'étant sollicité que pour charger la capacité de grille. Ainsi, le transistor MOSFET 20 sera passant pour toute tension comprise entre le minimum de grille, par exemple 4 V, et sa limite de fonctionnement, par exemple 100 V, tout en protégeant par limitation de tension la grille 28 à son maximum, par exemple 20 V.

Quelle que soit la tension délivrée, dans la configuration de la figure 1B dans laquelle la batterie 16 est la seule source d'énergie, elle peut donc alimenter la carte électronique 10 en se déchargeant. Lorsque le secteur 12 est raccordé à la carte 10 par fermeture de l'interrupteur 14 (voir figure 1C), lorsque le MOSFET 20 n'est pas passant car la tension inférieure au minimum de commande de grille 28, le courant pourra être inversé afin de recharger la batterie 16 : le transistor 20 devient alors passant, avec passage du courant de sa source 24 à son drain 22 vers les moyens de stockage 16. L'alimentation de la carte 10 est donc réalisée par le secteur 12 qui en outre recharge la batterie 16.

Cette solution selon l'invention peut être transposée directement aux alimentations 18' négatives par rapport à la référence : voir figure 2. Ainsi, un transistor 20' de type MOSFET à canal N est utilisé pour remplacer, en miroir, le MOSFET 20 de type P précédent. Les applications aux alimentations négatives de type batterie 16' de téléphonie à -48 V peuvent ainsi également bénéficier des enseignements de l'invention.

Bien que les mêmes éléments que précédemment puissent être utilisés pour l'alimentation, l'indication et la protection, la figure 2 illustre également des alternatives. En particulier, la protection du transistor 20' est réalisée par une diode Transil 36' ; l'alimentation principale est composée d'une deuxième source continue 12', par exemple un panneau photovoltaïque. Pour protéger l'équipement électronique 10 en cas d'inversion de la batterie 16' et déconnecter l'alimentation principale 12', la source 12' est associée à un récepteur JFET 14' normalement fermé, qui peut être polarisé et s'ouvrir lors de l'activation de moyens indicateurs 32' d'inversion de polarité, par exemple un optocoupleur 32' remplaçant la diode rouge 32. Ces alternatives peuvent être utilisées en remplacement et/ou en complément des éléments présentés en relation avec l'alimentation 18 positive de la figure 1.

Le dispositif selon l'invention consiste ainsi en un seul transistor MOSFET 20, 20' (canal P pour une protection positive et canal N pour une protection négative) monté en inverse sur le circuit 18, 18' d'alimentation par batterie 16, 16' d'un équipement électronique 10, qui s'autoalimente si la polarité d'entrée est correctement raccordée, ou qui se bloque en cas d'inversion de la polarité d'alimentation d'entrée. C'est la diode de corps 26 qui agit comme organe de protection intrinsèque ; elle est ensuite court-circuitée par le transistor 22, 24, 28 lui-même dès que sa tension de grille 28 est suffisante, ledit transistor 22, 24, 28 étant prévu pour conduire en inverse en fonctionnement normal ou dans son sens naturel en mode de recharge.

Par rapport aux solutions utilisées classiquement, qu'elles soient à simples diodes, transistors bipolaires ou même à pont redresseur, la consommation du dispositif de protection électronique 20 selon l'invention est plus faible, et permet la réversibilité du courant d'alimentation. Qui plus est, bien qu'il n'y ait pas de dégâts lors d'une inversion par erreur de raccordement, une indication par simple LED rouge 32 permet facilement à l'opérateur de voir son erreur ; l'indication d'un branchement 32, 34 correct ou non permet par ailleurs de vérifier la qualité du raccordement.

Plus généralement, la solution selon l'invention présente ainsi un dispositif à très basse consommation réalisant le détrompage et la protection électroniques d'un circuit 18 alimenté par ailleurs par secteur 12, et signalant visuellement le sens de branchement d'une source continue 16 sur un équipement électronique 10. Le circuit 18 autoalimenté de peu de composants, les composants étant qui plus est d'usage courant, permet une protection contre l'inversion de polarité, tout en étant adapté pour une large plage de tensions d'entrée et en permettant la recharge de la batterie 16 lorsque le produit 10 est alimenté par le secteur 12. Les domaines d'application sont divers, tant du domaine particulier de la distribution électrique et de l'alimentation de composants assurant le contrôle et/ou la commande du réseau, que de domaines moins spécialisés comme par exemple les véhicules électriques ou les applications solaires, avec protection des onduleurs.

Bien que l'invention ait été décrite en référence à un système de protection pour le branchement d'une carte électronique 10 sur une batterie 16, elle ne s'y limite pas : d'autres éléments peuvent être concernés par l'invention, en particulier tous les équipements comprenant une alimentation auxiliaire continue, et tous les équipements alimentés en courant continu qui peuvent être raccordés de manière non permanente. Par ailleurs, les différents composants présentés dans le circuit électronique peuvent être remplacés par des composants équivalents : par exemple, la diode Zener 36 peut laisser sa place à un autre dispositif de protection à limitation de tension (Transil, GEMOV, ...) du MOSFET 20 limitant la tension de grille ; le MOSFET 20 peut être à appauvrissement ; un raccordement à un système d'interruption ou d'alarme peut compléter et/ou remplacer les diodes de signalisation 32, 34 ; la diode 32 peut également être associée à des moyens d'inhibition de l'alimentation par la source alternative en cas de raccordement erroné.

## Revendications

1. Circuit (18) d'alimentation par une source continue (16) d'un équipement électronique (10) comprenant des moyens de raccordement d'une source continue (16), des moyens de raccordement d'un équipement électronique (10) et des moyens de protection (20) contre le raccordement inversé de la source continue (16) qui comprennent un transistor de type MOSFET (20) monté en inverse entre les moyens de raccordement de l'équipement (10) et de la source continue (16), **caractérisé en ce que** le circuit d'alimentation comprend une deuxième source d'alimentation (12, 12') munie de moyens de raccordement à l'équipement électronique (10) et associée à des moyens d'interruption (14, 14'), lesdits moyens d'interruption (14') pouvant être commandés par le sens du courant au sein du circuit (18).

2. Circuit d'alimentation selon la revendication 1 comprenant un optocoupleur (32') en parallèle des moyens de raccordement de la source continue (16') et les moyens d'interruption (14') comprennent un récepteur les maintenant ouverts lorsque l'optocoupleur (32') détecte que le courant est inversé entre lesdits moyens de raccordement.

3. Circuit d'alimentation selon l'une des revendications 1 ou 2 comprenant en outre des moyens de protection (36) du transistor (20) limitant sa tension de grille (28).

4. Circuit d'alimentation selon la revendication 3 dans lequel les moyens de protection (36) comprennent une diode de type Zener en parallèle entre la grille (28) du transistor (20) et sa source (24).

5. Circuit d'alimentation selon l'une des revendications 1 à 4 comprenant en outre des moyens indicateurs du sens du courant au sein du circuit.

6. Circuit d'alimentation selon la revendication 5 dans lequel les moyens indicateurs comprennent au moins une diode électroluminescente (32, 34) montée en parallèle des moyens de raccordement de la source continue (16) et dont l'activation dépend du sens de raccordement de la source continue (16).

7. Circuit d'alimentation selon l'une des revendications 1 à 6 comprenant une carte électronique (10) couplée aux moyens de raccordement d'un équipement électronique.

8. Circuit d'alimentation selon l'une des revendications 1 à 7 comprenant une batterie rechargeable (16) couplée aux moyens de raccordement d'une source continue.

9. Circuit d'alimentation selon l'une des revendications 1 à 8 dans laquelle la deuxième source d'alimentation est une source d'alimentation alternative (12).

10. Circuit d'alimentation selon l'une des revendications 1 à 9 dans lequel l'alimentation du circuit est à tension positive et le transistor (20) est un MOSFET (20) de type P.
